# EUROPEAN PATENT SPECIFICATION

(11) **EP 2 755 430 B1**
(45) Date of publication and mention of the grant of the patent: **15.07.2015**
(21) Application number: 13305021.1
(22) Date of filing: 11.01.2013
(51) Int. Cl.: H04W 52/14, H04W 52/40

(54) **Soft handover techniques**
Soft Handover-Techniken
Techniques de transfert intercellulaire sans coupure

(43) Date of publication of application: 16.07.2014
(73) Proprietor: ALCATEL LUCENT, 92100 Boulogne-Billancourt (FR)
(72) Inventor: Wong, Shin Horng, Swindon, Wiltshire SN5 7DJ (GB)
(74) Representative: Sarup, David Alexander

(56) References cited:
- US-A1- 2007 010 253
- US-A1- 2012 213 092
- US-A1- 2012 322 494
- MOTOROLA: "HS-DPCCH Power Control in Soft-Handoff", 3GPP DRAFT; R1-02-0824, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gyeongju, Korea; 20020522, 22 May 2002 (2002-05-22), XP050096395, [retrieved on 2002-05-22]
- "3rd Generation Partnership Project; Technical Specification Group Radio Access Network; Radio Resource Control (RRC); Protocol specification (Release 8)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V8.20.0, 21 September 2012 (2012-09-21), pages 1-1731, XP050649571, [retrieved on 2012-09-21]

## Description

### FIELD OF THE INVENTION

The present invention relates to a method of adapting user equipment uplink transmission power for user equipment performing soft handover in a heterogeneous wireless telecommunication network; together with a network control node and computer program product configured to perform that method.

### BACKGROUND

Wireless telecommunication systems are known. In such systems, mobile communication devices (for example, mobile telephones) are operable to communicate with base stations provided by network providers.

In known wireless telecommunication systems, radio coverage is provided to network connectable devices, such as mobile telephones, or wireless devices such as iPads or other similar tablets, within areas known as cells. Abase station is located in each cell to provide radio coverage. Typically, network connectable devices in each cell are operable to receive information and data from a base station and to transmit information and data to a base station.

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

Traditional base stations provide coverage in relatively large geographical areas and those cells are often referred to as macro cells. It is possible to provide a heterogeneous network (hetnet) where smaller sized cells are provided within macro cells. Such smaller sized cells are sometimes referred to as micro cells, pico cells or femto cells. One way to establish a small cell is to provide a small cell base station that provides coverage having a relatively limited range within the coverage area of the macro cell. The transmission power of a small cell base station is relatively low and; hence, each small cell provides a small coverage area compared to that of a micro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

US2012/0322494 describes methods for management of high speed dedicated physical control channel decoding in soft handover. Embodiments described relate to techniques for improving reliability of HS-DPCCH decoding in soft handover procedures. In one described method, a base station performs a method for controlling transmission power of a mobile entity in a wireless communication network. The method includes the step of determining a difference, indicative of an amount by which path loss for a wireless link between a mobile entity and a serving node B exceeds a minimum of path losses for wireless links between the mobile entity and non-serving node Bs of the wireless network. The method includes instructing the mobile entity to boost a traffic-to-pilot transmission power offset for transmissions on a high speed dedicated physical control channel to the serving node B, in proportion to the difference. In described methods, a step of determining a difference indicative of an amount by which path loss for a wireless link between the mobile entity and a serving node B exceeds a minimum of path losses for wireless links between the mobile entity and non-serving node Bs is performed.

US2007/0010253 describes a control node in a radio access network. The control node comprises a soft handover unit and a power control unit. The soft handover unit controls a soft handover procedure. The power control unit facilitates an adjustment of user equipment uplink power level for transmissions to plural base stations. In one described embodiment the soft handover control unit receives a message which requests that a cell be added to an active set for a connection involved in soft handover. The message received can be a measurement control message. Addition of the cell to the active set involves soft handover control unit storing suitable information regarding that cell in an appropriate record of active set memory for the connection involved in soft handover.

Although the deployment of such small cell base stations can provide advantages, unexpected consequences can occur.

Accordingly, it is desired to provide an improved technique for the operation of heterogeneous networks.

### SUMMARY

Accordingly a first aspect provides a method of adopting user equipment uplink transmission power for user equipment performing soft handover in a heterogeneous wireless telecommunication network in which at least one network access node provides a first region of radio coverage, and at least one low power network access node provides a second region of radio coverage smaller than said first region of radio coverage, the method comprising:: receiving a request from said user equipment to add a new network access node or low power network access node to its active set; determining whether addition of the new network access node or low power network access node will change the active set to a mixed active set including both at least one network access node providing a first region of radio coverage and at least one low power network access node providing a second region of radio coverage smaller than the first region of radio coverage; and, if so transmitting an indication to the user equipment to adapt its uplink transmission power by increasing the transmission power of at least one uplink communication channel if the request to add the new network access node or low power network access node to its active set is approved.

As described above, traditional base stations provide coverage in relatively large geographical areas and those cells are often referred to as macro cells. It is possible to provide a heterogeneous network (hetnet) where smaller sized cells, sometimes referred to as low power nodes, are provided within macro cells. Such smaller sized cells are sometimes also referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network. That is to say, in a heterogeneous network, small cells or "Low Power Nodes" (LPN) can be placed within a macro cell supported by a macro base station to increase the capacity of the network by offloading some user equipment operating within the macro cell to one of the low power nodes.

In general within wireless communication networks, an uplink boundary is defined as a boundary between two cells, Cell 1 and Cell 2, where uplink pathloss between user equipment and Cell 1 is the same as uplink pathloss between user equipment and Cell 2. That is to say, a base station supporting Cell 1 and a base station supporting Cell 2 are likely to receive transmissions made by user equipment at the boundary at a similar power.

A downlink boundary is defined as a boundary between two cells, Cell 1 and Cell 2, at which user equipment will typically receive a transmission made by each base station supporting Cell 1 and Cell 2, for example, a pilot signal transmission, at the same received signal power.

Typically, user equipment is operable to request a change to its serving cell when it determines, via measurement at the user equipment of received pilot signal strength, that a downlink boundary has been crossed. In a typical macro cell network deployment in which all macro cell base stations are operable to transmit at substantially the same pilot transmission power, it is likely that the uplink boundary and downlink boundary will be approximately the same.

The transmission powers of access nodes in a HetNet comprising macro cell base stations and LPN are typically significantly different. As a result, the uplink and downlink boundary between a macrocell base station and a LPN are likely to no longer substantially coincide. For example, as a consequence of HetNet implementations involving low power nodes an uplink and downlink power "imbalance" may occur. That is to say, user equipment uplink transmissions maybe received more strongly at a base station other than its serving base station, whilst downlink transmissions from the serving base station may still be the most strongly received at the user equipment. The uplink-downlink imbalance region typically occurs between the uplink and downlink boundary.

In wireless telecommunications networks, user equipment can move between geographical base station coverage areas. Services provided to user equipment are typically overseen by a radio network controller (RNC). The RNC communicates with user equipment and base stations and determines which base station each user equipment may be primarily connected to. Furthermore, the RNC acts to control and communicate with a base station and user equipment when user equipment moves from a geographical area served by one base station to a geographical area served by another base station, or between geographical areas served by the same base station.

In some cellular systems, for example, in a UMTS system, functionality known as "soft handover" (SHO) can be implemented. That functionality allows data traffic transmitted by user equipment or other mobile terminals using uplink channels to be received and decoded by multiple base stations. Those base stations may also be known in a UMTS system as "node Bs". Furthermore, if utilizing soft handover techniques, a user equipment may receive and combine data and control signals from multiple base stations in the downlink. That is to say, the user equipment can receive or listen to transmissions from multiple base stations and multiple base stations may listen to transmissions made by user equipment. This has several advantages including that transmissions made by user equipment are not seen as interference by adjacent cells. In order that such soft handover techniques can be implemented, it is necessary for user equipment and the relevant nodeBs to known that they are allowed and expecting to communicate with one another. User equipment is typically informed by the network of those nodeBs by which its transmissions can be heard and to which it may listen. That list of base stations is referred to as the "active set" of that user equipment.

Typically, if implementing a soft handover regime, a radio link is first set up between user equipment and a single base station. If it is determined that entry to a soft handover regime is desirable and possible, necessary information about the configuration of existing uplink transmissions from the user equipment to the single base station, including for example, scrambling code being used, can be passed from a first base station via a radio network controller (RNC) to a second base station to be added to the active set of the user equipment. That information passed to a second base station enables the second base station to synchronize its operation to the user equipment's uplink transmissions. Once a second node B has obtained uplink synchronization, the second base station can set up a new downlink with the user equipment such that its transmission timing is likely to be successfully received at the user equipment close to the reception timing of the existing downlink between the first base station and the user equipment.

Use of soft handover techniques can lead to improved network performance, since by allowing more than one base station to communicate with user equipment it is possible to obtain a degree of selective combination gain through macro diversity and soft combinations leading to gain. Soft handover functionality also allows an opportunity to minimise interference caused between cells by user equipment operating at the edge of geographical coverage regions supported by adjacent base stations.

The first aspect recognises that a typical soft handover region in a heterogeneous network will fall within the region in which it is likely that there will be an uplink-downlink power imbalance. Typical soft handover operation of user equipment means that, unless all cells are of substantially the same size, there is likely to be communication imbalance for user equipment performing soft handover techniques. If all cells in a user equipment active set are of substantially the same size, then typical operation remains effective and efficient, but the inclusion of one or more cells of a different size in a user equipment active set introduces the likelihood of user equipment performing soft handover failing to be able to communicate with a serving base station. The first aspect recognizes that by identifying that user equipment may be subject to an uplink-downlink imbalance, the user equipment may be configured to take appropriate ameliorative action, for example, by increasing uplink transmission power.

In other words, telecommunications networks operating in accordance with aspects and embodiments described maybe operable to communicate an indication of a likely uplink-downlink boundary imbalance to user equipment. Such an indication may be communicated to user equipment in various ways, including, for example, in an Active Set Update message. Such an indication is needed only if the network suspects that there is likely to be an uplink-downlink boundary imbalance issue. Criteria indicative of such an imbalance, may, for example, include that a new non-serving cell is a LPN. Such an approach recognizes that the weakening of uplink control signal to a macro serving cell is likely to occur for user equipment operating in a SHO region.

In one embodiment, the at least one uplink communication channel is configured to carry serving cell control messaging. Accordingly, the information required by a serving cell is more likely to be received by the serving cell in a situation in which likelihood of an uplink-downlink imbalance has been identified.

In one embodiment, the at least one uplink communication channel comprises an uplink feedback channel. In one embodiment, the at least one uplink communication channel comprises a channel configured to carry scheduling information control messaging. Accordingly, it is possible to instruct user equipment to operate such that the power of the key channels of relevance to a serving base station, for example, the HS-DPCCH and SI channel, are sent with a higher offset power relative to the pilot power, that higher power offset being chosen such that it is likely that the key channels are still received at a serving base station, even if user equipment is in the power imbalance region between a downlink and uplink boundary.

In one embodiment, the indication to adapt user equipment uplink transmission power further comprises an indication of the increase to uplink transmission power. The network may, for example, also be operable to specify an additional power offset to be applied. The network may, for example, define the level of the offset to be applied. The level of offset applied may also be communicated to user equipment, that offset to be applied in relation to, for example, a HS-DPCCH and/or SI messaging. The level of offset to be applied may be communicated to user equipment together with an indicator that uplink-downlink boundary issues maybe an issue.

In one embodiment, the indication to adapt user equipment uplink transmission power comprises an indication of said increase to uplink transmission power in relation to each said at least one uplink communication channel. In some embodiments, a separate, or different, power offset may be signaled to user equipment to implement in relation to HS-DPCCH transmissions and SI transmissions. It will be appreciated that an adaptation of transmission power can be set in relation to only those channels of interest, and, in some embodiments, only to those channels carrying information of interest to a serving cell. Furthermore, an adaptation can be set to be different in relation to each channel of interest, or may be set to be the same for each channel of interest.

In one embodiment, the increase of the transmission power of at least one uplink communication channel comprises a configurable power offset in relation to the at least one uplink communication channel. In one embodiment, the increase of the transmission power of at least one uplink communication channel comprises an indication of a minimum transmission power in relation to the at least one uplink communication channel. Typically only one power offset is required in the case where user equipment has one or more than one LPN in its Active Set whilst being served by a macro base station. In some embodiments, the power offset may need updating if a new LPN non-serving cell is added to the Active Set. It will be appreciated that LPN (serving cell) to LPN (non-serving cell) operation may not require a significant power offset to be implemented, since, in some network arrangements, there may be coincidence of uplink and downlink boundaries between low power nodes.

It will be appreciated that, in some embodiments, SI can be sent by user equipment using an E-DCH channel and thus it may be "piggy backed" onto data traffic. If the data traffic is sent with sufficient power offset, then an additional power offset may not be required. The additional power offset may only be required if SI, when piggybacked onto user traffic, is transmitted by user equipment at a power level below an indicated power offset required to reach the serving base station.

In one embodiment, the indication to adapt user equipment uplink transmission power further comprises an indication of operational criteria to be met by access nodes in the user equipment active set before implementation of the increase to uplink transmission power. In some embodiments the network may be operable to indicate to user equipment when it should apply an additional power offset. Various implementation triggers may be chosen by the network. For example, the additional power offset (or power offsets if separate offsets are used for HS-DPCCH and SI) can be applied when a received LPN signal power measured by user equipment is within X dB that of the serving macro cell base station. That is to say, in one embodiment, the indication of operational criteria comprises an indication of a threshold difference between received pilot signal strength from a serving cell and received pilot signal strength from the new network access node or low power network access node.

In one embodiment, the method further comprises receiving a notification from the user equipment that network access node or low power network access node is to be removed from its active set; determining whether removal of the new network access node or low power network access node will change the active set to an active set including only at least one network access node providing a first region of radio coverage or only at least one low power network access node providing a second region of radio coverage smaller than the first region of radio coverage; and, if so transmitting an indication to the user equipment to remove any currently implemented adaptation its uplink transmission power to increase the transmission power of at least one uplink communication channel. According to such embodiments, the additional power offset to be implemented in the case of a likely uplink-downlink boundary discrepancy can be "removed" when all LPN cells are absent from a user equipment Active Set. Since there are no low power nodes supporting cells which could cause a potential uplink-downlink power imbalance, there would be no need to apply an additional power offset.

A computer program product operable, when executed on a computer, to perform the method of the first aspect.

A second aspect provides a network control node operable to adapt user equipment uplink transmission power for user equipment performing soft handover in a heterogeneous wireless telecommunication network in which at least one network access node provides a first region of radio coverage, and at least one low power network access node provides a second region of radio coverage smaller than the first region of radio coverage, the network control node comprising: reception logic configured to receive a request from the user equipment to add a new network access node or low power network access node to its active set; determination logic configured to determine whether addition of the new network access node or low power network access node will change the active set to a mixed active set including both at least one network access node providing a first region of radio coverage and at least one low power network access node providing a second region of radio coverage smaller than the first region of radio coverage; and transmission logic configured to transmit, if addition of said network access node or low power network access node changes said active set to a mixed active set, an indication to the user equipment to adapt its uplink transmission power by increasing the transmission power of at least one uplink communication channel if the request to add the new network access node or low power network access node to its active set is approved.

The network control node may comprise a serving base station, low power node gateway or RNC as appropriate. It will be appreciated that decisions made in relation to the level of configurable appropriate power offsets and similar features may be made at a RNC level yet communicated to user equipment via signalling between user equipment and a base station, low power node, or other similar network access node.

In one embodiment, the at least one uplink communication channel is configured to carry serving cell control messaging.

In one embodiment, the at least one uplink communication channel comprises an uplink feedback channel.

In one embodiment, the at least one uplink communication channel comprises a channel configured to carry scheduling information control messaging.

In one embodiment, the indication to adapt user equipment uplink transmission power further comprises an indication of the increase to uplink transmission power.

In one embodiment, the indication to adapt user equipment uplink transmission power comprises an indication of the increase to uplink transmission power in relation to each at least one uplink communication channel.

In one embodiment, the increase of the transmission power of at least one uplink communication channel comprises a configurable power offset in relation to the at least one uplink communication channel.

In one embodiment, the increase of the transmission power of at least one uplink communication channel comprises an indication of a minimum transmission power in relation to the at least one uplink communication channel.

In one embodiment, the indication to adapt user equipment uplink transmission power further comprises an indication of operational criteria to be met by access nodes in the user equipment active set before implementation of the increase to uplink transmission power.

In one embodiment, the indication of operational criteria comprises an indication of a threshold difference between received pilot signal strength from a serving cell and received pilot signal strength from a new network access node or low power network access node.

In one embodiment, the network control node comprises: reception logic further configured to receive a notification from the user equipment that a network access node or low power network access node is to be removed from its active set; the determination logic is configured to further determine whether removal of the new network access node or low power network access node will change the active set to an active set including only at least one network access node providing a first region of radio coverage or only at least one low power network access node providing a second region of radio coverage smaller than the first region of radio coverage; and, if so the transmission logic is further operable to transmit an indication to the user equipment to remove any currently implemented adaptation its uplink transmission power to increase the transmission power of at least one uplink communication channel.

Further particular and preferred aspects are set out in the accompanying independent and dependent claims. Features of the dependent claims may be combined with features of the independent claims as appropriate, and in combinations other than those explicitly set out in the claims. Features and embodiments described in relation to one aspect described herein maybe combined with other aspects as appropriate.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically the main components of an example wireless telecommunications network;
Figure 2 illustrates schematically a network comprising a macro base station and a low power node; and
Figure 3 is a signaling diagram illustrating possible signaling between user equipment and a network control node.

### DESCRIPTION OF THE EMBODIMENTS

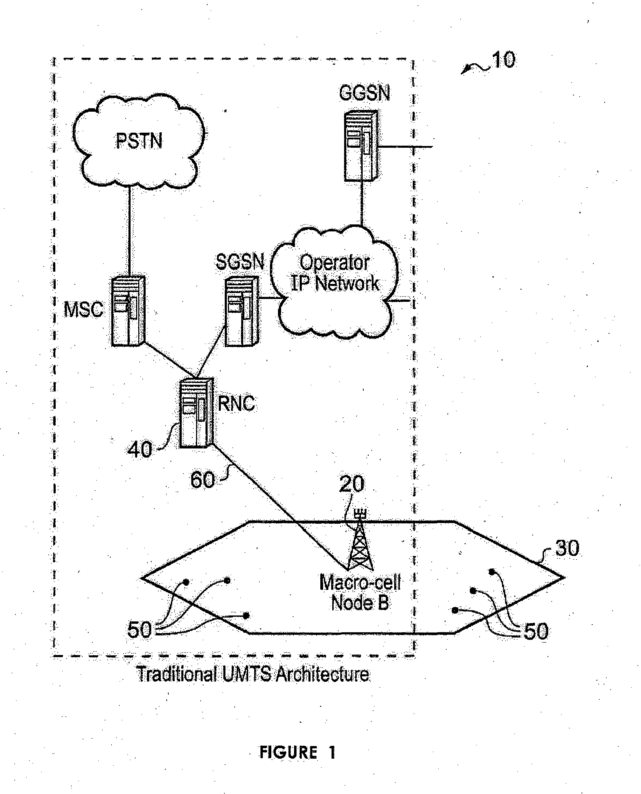

Figure 1 illustrates schematically the main components of a wireless telecommunications network 10. In the UMTS network architecture illustrated, user equipment 50 roam through the wireless telecommunications system. Base stations 20 are provided which support areas of radio coverage 30. A number of such base stations 20 are provided and are distributed geographically in order to provide a wide area of coverage to user equipment 50.

When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small subset of a total number of user equipment and base stations that may be present in a typical communication network. It will also be appreciated that different network archtectures may be implemented, including, for example a Long Term Evolution (LTE) network in which the functionality provided by network nodes described above is provided by network nodes which are named differently but have analogous functionality.

Traditional base stations provide coverage in relatively large geographical areas and those cells are often referred to as macro cells. It is possible to provide a heterogeneous network (hetnet) where smaller sized cells, sometimes referred to as low power nodes, are provided within macro cells. Such smaller sized cells are sometimes also referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network. That is to say, in a heterogeneous network, small cells or "Low Power Nodes" (LPN) can be placed within a macro cell supported by a macro base station to increase the capacity of the network by offloading some user equipment operating within the macro cell to one of the low power nodes.

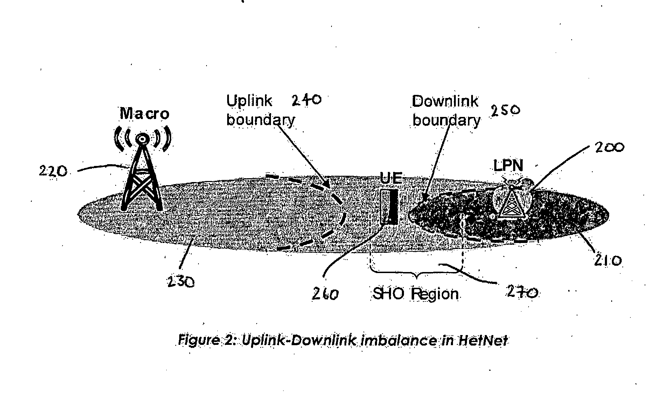

Figure 2 illustrates schematically a network comprising a macro base station and a low power node. In the example shown, a LPN 200 supporting a low power region of coverage 210 is placed at the edge of a macrocell 230 supported by a.macro base station 220.

In general within wireless communication networks, an uplink boundary is defined as a boundary between two cells, Cell 1 and Cell 2, where uplink pathloss between user equipment and Cell 1 is the same as uplink pathloss between user equipment and Cell 2. That is to say, a base station supporting Cell 1 and a base station supporting Cell 2 are likely to receive transmissions made by user equipment at the boundary at a similar power.

A downlink boundary is defined as a boundary between two cells, Cell 1 and Cell 2, at which user equipment will typically receive a transmission made by each base station supporting Cell 1 and Cell 2, for example, a pilot signal transmission, at the same received signal power.

Typically, user equipment is operable to request a change to its serving cell when it determines, via measurement at the user equipment of received pilot signal strength, that a downlink boundary has been crossed. In a typical macro cell network deployment in which all macro cell base stations are operable to transmit at substantially the same pilot transmission power, it is likely that the uplink boundary and downlink boundary will be approximately the same.

The transmission powers of access nodes in a HetNet comprising macro cell base stations and LPN are typically significantly different. As a result, the uplink and downlink boundary between a macrocell base station and a LPN are likely to no longer substantially coincide. Figure 2 illustrates schematically possible positions of such an uplink boundary 240 and downlink boundary 250 in a HetNet deployment.

As a consequence of HetNet implementations involving low power nodes an uplink and downlink power "imbalance" may occur. That is to say, user equipment uplink transmissions may be received more strongly at a base station other than its serving base station. In the example shown in Figure 2, user equipment 260 is located such that low power node 200 receives its uplink transmissions more strongly than macro base station 220, despite the user equipment being likely to receive downlink pilot transmissions made by macro base station 220 more strongly than pilot transmissions made by low power node 200. The uplink-downlink imbalance region typically occurs between the uplink and downlink boundary.

In wireless telecommunications networks, user equipment can move between geographical base station coverage areas. Services provided to user equipment are typically overseen by a radio network controller (RNC). The RNC communicates with user equipment and base stations and determines which base station each user equipment may be primarily connected to. Furthermore, the RNC acts to control and communicate with a base station and user equipment when user equipment moves from a geographical area served by one base station to a geographical area served by another base station, or between geographical areas served by the same base station.

In some cellular systems, for example, in a UMTS system, functionality known as "soft handover" (SHO) can be implemented. That functionality allows data traffic transmitted by user equipment or other mobile terminals using uplink channels to be received and decoded by multiple base stations. Those base stations may also be known in a UMTS system as "node Bs". Furthermore, if utilizing soft handover techniques, a user equipment may receive and combine data and control signals from multiple base stations in the downlink. That is to say, the user equipment can receive or listen to transmissions from multiple base stations and multiple base stations may listen to transmissions made by user equipment. This has several advantages including that transmissions made by user equipment are not seen as interference by adjacent cells. In order that such soft handover techniques can be implemented, it is necessary for user equipment and the relevant nodeBs to known that they are allowed and expecting to communicate with one another. User equipment is typically informed by the network of those nodeBs by which its transmissions can be heard and to which it may listen. That list of base stations is referred to as the "active set." of that user equipment.

Typically, if implementing a soft handover regime, a radio link is first set up between user equipment and a single base station. If it is determined that entry to a soft handover regime is desirable and possible, necessary information about the configuration of existing uplink transmissions from the user equipment to the single base station, including for example, scrambling code being used, can be passed from a first base station via a radio network controller (RNC) to a second base station to be added to the active set of the user equipment. That information passed to a second base station enables the second base station to synchronize its operation to the user equipment's uplink transmissions. Once a second node B has obtained uplink synchronization, the second base station can set up a new downlink with the user equipment such that its transmission timing is likely to be successfully received at the user equipment close to the reception timing of the existing downlink between the first base station and the user equipment.

Use of soft handover techniques can lead to improved network performance, since by allowing more than one base station to communicate with user equipment it is possible to obtain a degree of selective combination gain through macro diversity and soft combinations leading to gain. Soft handover functionality also allows an opportunity to minimise interference caused between cells by user equipment operating at the edge of geographical coverage regions supported by adjacent base stations.

In a HetNet such as the one illustrated in Figure 2, a typical Soft Handover (SHO) region 270 falls within the region in which it is likely that there will be an uplink-downlink power imbalance. User equipment operating in the SHO region 270 is served by macro base station 220 and the LPN acts as a non-serving cell. Since the uplink pathloss between the user equipment and LPN is likely to be smaller than that between the user equipment and macro base station 220, since the uplink boundary 240 between the macrobase station 220 and LPN 200 has been passed, the LPN will dominate inner loop power control. That is to say, the LPN 200 is likely to instruct the user equipment to reduce its pilot transmission power. In a macro-only network, where uplink and downlink boundaries are likely to coincide, user equipment is operable to obey such an instruction since, as long as one base station can communicate well with user equipment, SHO operation is likely to offer an improvement in overall network operation.

In a HetNet in which the uplink-downlink boundary is unlikely to coincide, user equipment operating to power down on the instruction of the LPN operates such that the received uplink pilot transmission power at the macro base station is significantly reduced. It will be appreciated that some information transmitted on channels by the user equipment, for example, uplink feedback (HSDPA) channel, HS-DPCCH and Scheduling Information (SI) control messages for E-DCH, are only required to be received in the serving cell. In this case, the macro base station 220 is likely to receive user equipment transmissions at a poor SNIR, because the pilot transmission power has been reduced on instruction of the LPN. Such network operation impacts performance of both the downlink and uplink throughput.

It is possible to instruct user equipment to operate such that the power of the key channels of relevance to a serving base station, for example, the HS-DPCCH and SI channel, are sent with a higher offset power relative to the pilot power, that higher power offset being chosen such that it is likely that the key channels are still received at a serving base station, even if user equipment is in the power imbalance region between a downlink and uplink boundary. However, to ensure efficient network operation, such offsets should not be constantly applied. Aspects and embodiments may offer a means to determine when user equipment could apply such an additional power offset for the relevant control messages and/or channels of interest to a serving base station.

### Overview

Before discussing the embodiments in any more detail, first an overview will be provided. Networks operating in accordance with aspects and embodiments described may be operable to communicate an indication of a likely uplink-downlink boundary imbalance to user equipment. Such an indication may be communicated to user equipment in various ways, including, for example, in an Active Set Update message. Such an indication is needed only if the network suspects that there is likely to be an uplink-downlink boundary imbalance issue. Criteria indicative of such an imbalance, may, for example, include that a new non-serving cell is a LPN. Such an approach recognizes that the weakening of uplink control signal to a macro serving cell is likely to occur for user equipment operating in a SHO region.

According to one embodiment, the network may also be operable to specify an additional power offset to be applied. The network may, for example, define the level of the offset to be applied. The level of offset applied may also be communicated to user equipment, that offset to be applied in relation to, for example, a HS-DPCCH and/or SI messaging. The level of offset to be applied may be communicated to user equipment together with the indicator that uplink-downlink boundary issues may be an issue.

In some embodiments, a separate, or different, power offset may be signaled to user equipment to implement in relation to HS-DPCCH transmissions and SI transmissions.

Typically only one power offset is required in the case where user equipment has one or more than one LPN in its Active Set whilst being served by a macro base station. In some embodiments, the power offset may need updating if a new LPN non-serving cell is added to the Active Set. It will be appreciated that LPN (serving cell) to LPN (non-serving cell) operation may not require a significant power offset to be implemented, since, in some network arrangements, there maybe coincidence of uplink and downlink boundaries between low power nodes.

It will be appreciated that, in some embodiments, SI can be sent by user equipment using an E-DCH channel and thus it may be "piggy backed" onto data traffic. If the data traffic is sent with sufficient power offset, then an additional power offset may not be required. The additional power offset may only be required if SI, when piggybacked onto user traffic, is transmitted by user equipment at a power level below an indicated power offset required to reach the serving base station.

In some embodiments the network may be operable to indicate to user equipment when it should apply an additional power offset. Various implementation triggers may be chosen by the network. For example, the additional power offset (or power offsets if separate offsets are used for HS-DPCCH and SI) can be applied when a received LPN signal power measured by user equipment is within X dB that of the serving macro cell base station.

According to some embodiments, the additional power offset to be implemented in the case of a likely uplink-downlink boundary discrepancy can be "removed" when all LPN cells are absent from a user equipment Active Set. Since there are no low power nodes supporting cells which could cause a potential uplink-downlink power imbalance, there would be no need to apply an additional power offset.

### Example 1

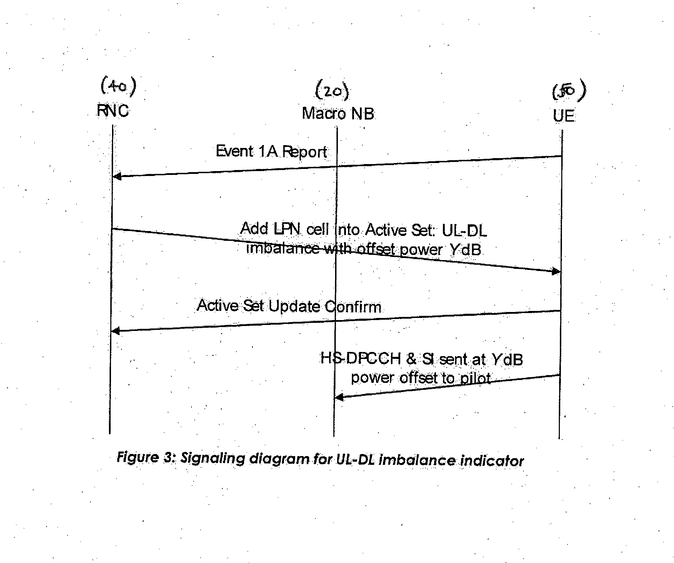

Figure 3 is a signaling diagram illustrating possible signaling between user equipment 50 and a network control node, in this case, an RNC. As part of user equipment measurement control, the user equipment is operable to report a trigger "Event 1A" when it measures that a neighbour cell's signal quality is above a threshold relative to that of its serving cell. In the scenario illustrated in Figure 3, the serving cell is a macro cell whilst the neighbour cell that caused Event 1A to trigger is supported by a LPN.

The network receives measurement report for Event 1A. It is operable to recognise that the cell causing the trigger event is a LPN and that uplink-downlink power imbalance may be significant. The network is therefore operable to signal an indication of likely uplink-downlink imbalance to the user equipment reporting the trigger, the indication further comprising an indication of power offset (*Y* dB) to be applied by the user equipment to HS-DPCCH and SI.

The user equipment is operable to send an "Active Set update confirm" message and then starts applying the new power offset to HS-DPCCH and SI messages.

In the case of SI, the user equipment may be operable to apply the requested offset when the SI is not piggybacked to a data transmission, for example, a transmission on an E-DCH. Otherwise, the SI offset is applied by the user equipment if the E-DCH power offset is determined to be less than *Y* dB.

Aspects and embodiments described may, for example, avoid a scenario in a HetNet in which HS-DPCCH and SI are transmitted at a power too low to be successfully received at a serving macro cell in an uplink-downlink imbalance scenario.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network control node (40) method for adapting user equipment (260) uplink transmission power of user equipment (260) performing soft handover in a heterogeneous wireless telecommunication network (10) in which at least one network access node (220) provides a first region of radio coverage (230), and at least one low power network access node (200) provides second region of radio coverage (210) smaller than said first region of radio coverage (230), said method comprising:
receiving a request from said user equipment (260) to add a new network access node (220) or low power network access node (200) to its active set;
determining whether addition of said new network access node (220) or low power network access node (200) will change said active set to a mixed active set including both at least one said network access node (220) providing said first region of radio coverage (230) and at least one said low power network access node (200) providing said second region of radio coverage (210) smaller than said first region of radio coverage (230); and, if addition of said network access node or low power network access node changes said active set to a mixed active set,
transmitting an indication to said user equipment (260) to adapt its uplink transmission power by increasing the transmission power of at least one uplink communication channel, if said request to add said new network access node (220) or
low power network access node (200) to its active set is approved.

2. A method according to claim 1, wherein said at least one uplink communication channel is configured to carry serving cell control messaging.

3. A method according to claim 1 or claim 2, wherein said at least one uplink communication channel comprises an uplink feedback channel.

4. A method according to claim 1 or claim 2, wherein said at least one uplink communication channel comprises a channel configured to carry scheduling information control messaging.

5. A method according to any preceding claim, wherein said indication to adapt user equipment uplink transmission power further comprises an indication of said increase to uplink transmission power.

6. A method according to any preceding claim, wherein said indication to adapt user equipment uplink transmission power comprises an indication of said increase to uplink transmission power in relation to each said at least one uplink communication channel.

7. A method according to any preceding claim, wherein said increase of the transmission power of at least one uplink communication channel comprises a configurable power offset in relation to said at least one uplink communication channel.

8. A method according to any preceding claim, wherein said increase of the transmission power of at least one uplink communication channel comprises an indication of a minimum transmission power in relation to said at least one uplink communication channel.

9. A method according to any preceding claim, wherein said indication to adapt user equipment uplink transmission power further comprises an indication of operational criteria to be met by access nodes in said user equipment active set before implementation of said increase to uplink transmission power.

10. A method according to claim 9, wherein said indication of operational criteria comprises an indication of a threshold difference between received pilot signal strength from a serving cell and received pilot signal strength from said new network access node (220) or low power network access node (200).

11. A method according to any preceding claim, wherein said method further comprises receiving a notification from said user equipment (260) that network access node (220) or low power network access node (200) is to be removed from its active set;
determining whether removal of said new network access nods (220) or low power network access node (200) will change said active set to ah active set including only at least one said network access node (220) providing said first region of radio coverage (230) or only at least one said low power network access node (200) providing said second region of radio coverage (210) smaller than said first region of radio coverage (230); and, if so
transmitting an indication to said user equipment (260) to remove any currently implemented adaptation its uplink transmission power to increase the transmission power of at least one uplink communication channel.

12. A network control node (40) operable to adapt user equipment (260) uplink transmission power for user equipment (260) performing soft handover in a heterogeneous wireless telecommunication network (10) in which at least one network access node (220) providers a first region of radio coverage (230), and at least one low power network access node (200) provides a second region of radio coverage (210) smaller than said first region of radio coverage (230), said network control node (240) comprising:
reception logic configured to receive a request from said user equipment (260) to add a new network access node (220) or low power network access node (200) to its active set;
determination logic configured to determine whether addition of said new network access node (220) or low power network access node (200) will change said active set to a mixed active set including both at least one said network access node (220) providing said first region of radio coverage (230) and at least one said low power network access node (200) providing said second region of radio coverage (210) smaller than said first region of radio coverage (230); and,
transmission logic configured to transmit, if addition of said network access node or low power network access node changes said active set to a mixed active set, an indication to said user equipment (260) to adapt its uplink transmission power by increasing the transmission power of at least one.uplink communication channel if said request to add said new network access node (220) or low power network access node (200) to its active set is approved.

13. A computer program product operable, when executed on a computer to perform the method of and one of claims 1 to 11.

## Patentansprüche

1. Verfahren für Netzwerkkontrollknoten (40) zur Anpassung der Übertragungsleistung in Aufwärtsrichtung von Benutzerendgeräten (260) bei Benutzerendgeräten (260) durch das Ausführen eines sanften Verbindungsübergangs (Handover) in einem heterogenen drahtlosen Telekommunikationsnetzwerk (10), in welchem mindestens ein Netzzugangsknoten (220) einen ersten Funkabdeckungsbereich bereitstellt (230) sowie mindestens ein Niedrigleistungs-Netzwerkzugangsknoten (200) einen zweiten Funkabdeckungsbereich (210) bereitstellt, der kleiner ist als der besagte erste Funkabdeckungsbereich (230), wobei das besagte Verfahren Folgendes umfasst:
Empfang einer Anfrage von besagtem Benutzerendgerät (260) bezüglich des Hinzufügens eines neuen Netzwerkzugangsknotens (220) oder Niedrigleistungs-Netzwerkzugangsknotens (200) zu seinem aktiven Set;
Bestimmen, ob das Hinzufügen besagten neuen Netzwerkzugangsknotens (220) oder
Niedrigleistungs-Netzwerkzugangsknotens (200) das besagte aktive Set in ein gemischtes aktives Set umwandeln wird, wobei beide mindestens einen der besagten Netzwerkzugangsknoten (220) umfassen, der besagten ersten Funkabdeckungsbereich (230) und mindestens einen der besagten Niedrigleistungs-Netzwerkzugangsknoten (200) und damit besagten zweiten Funkabdeckungsbereich (210) bereitstellt, der kleiner ist als der besagte erste Funkabdeckungsbereich (230); und, falls das Hinzufügen des besagten Netzwerkzugangsknotens oder Niedrigleistungs-Netzwerkzugangsknotens besagtes aktives Set in ein gemischtes aktives Set umwandelt,
Übertragung einer Angabe an besagtes Benutzerendgerät (260), um dessen Übertragungsleistung in Aufwärtsrichtung anzupassen, und zwar durch Erhöhung der Übertragungsleistung von zumindest einem Kommunikationskanal in Aufwärtsrichtung,
wenn besagter Anfrage zum Hinzufügen des besagten neuen Netzwerkzugangsknotens (220) oder Niedrigleistungs-Netzwerkzugangsknotens (200) zu seinem aktiven Set stattgegeben wurde.

2. Verfahren nach Anspruch 1, wobei besagter mindestens eine Kommunikationskanal in Aufwärtsrichtung für das Übertragen von Steuernachrichten an die bedienende Zelle konfiguriert ist.

3. Verfahren nach Anspruch 1 oder 2, wobei besagter mindestens eine Kommunikationskanal in Aufwärtsrichtung einen Rückkopplungs-Kanal in Aufwärtsrichtung umfasst.

4. Verfahren nach Anspruch 1 oder 2, wobei besagter mindestens eine Kommunikationskanal in Aufwärtsrichtung einen für die Übermittlung von Steuerungsnachrichten zu Scheduling-Informationen konfigurierten Kanal umfasst.

5. Verfahren nach einem beliebigen der vorstehenden Ansprüche, wobei besagte Angabe zur Anpassung der Übertragungsleistung des Benutzerendgeräts in Aufwärtsrichtung weiterhin eine Angabe zur besagten Erhöhung der Übertragungsgeschwindigkeit in Aufwärtsrichtung enthält.

6. Verfahren nach einem beliebigen der vorstehenden Ansprüche, wobei besagte Angabe zur Anpassung der Übertragungsleistung des Benutzerendgeräts in Aufwärtsrichtung eine Angabe zur besagten Erhöhung der Übertragungsleistung in Aufwärtsrichtung im Verhältnis zu jedem besagten mindestens einen Kommunikationskanal in Aufwärtsrichtung umfasst.

7. Verfahren nach einem beliebigen der vorstehenden Ansprüche, wobei besagte Erhöhung der Übertragungsleistung von mindestens einem Kommunikationskanal in Aufwärtsrichtung einen konfigurierbaren Sendeleistungs-Versatz im Verhältnis zu besagtem mindestens einen Kommunikationskanal in Aufwärtsrichtung umfasst.

8. Verfahren nach einem beliebigen der vorstehenden Ansprüche, wobei besagte Erhöhung der Übertragungsleistung von mindestens einem Kommunikationskanal in Aufwärtsrichtung eine Angabe zu einer Mindest-Übertragungsleistung im Verhältnis zu besagtem mindestens einen Kommunikationskanal in Aufwärtsrichtung umfasst.

9. Verfahren nach einem beliebigen der vorstehenden Ansprüche, wobei die besagte Angabe zur Anpassung der Übertragungsleistung des Benutzerendgeräts in Aufwärtsrichtung weiterhin eine Angabe der Betriebskriterien umfasst, die von den Zugangsknoten im aktiven Set des besagten Benutzerendgeräts vor besagter Erhöhung der Übertragungsleistung in Aufwärtsrichtung zu erfüllen sind.

10. Verfahren nach Anspruch 9, wobei besagte Angabe von Betriebskriterien eine Angabe einer Grenzwertabweichung zwischen der Stärke des von einer bedienenden Zelle eingegangenen Pilotsignals und der Stärke des vom besagten Netzwerkzugangsknoten (220) oder von besagtem Niedrigleistungs-Netzwerkzugangsknoten (200) eingegangenen Pilotsignals umfasst.

11. Verfahren nach einem beliebigen der vorstehenden Ansprüche, wobei besagtes Verfahren weiterhin das Empfangen einer Mitteilung von besagtem Benutzerendgerät (260) umfasst, dass der Netzwerkzugangsknoten (220) oder Niedrigleistungs-Netzwerkzugangsknoten (200) vom aktiven Set dieses Benutzerendgeräts entfernt werden soll;
Bestimmen, ob die Entfernung besagten neuen Netzwerkzugangsknotens (220) oder Niedrigleistungs-Netzwerkzugangsknotens (200) besagtes aktives Set in ein aktives Set verändern wird, das nur mindestens einen besagten Netzwerkzugangsknoten (220) enthält, der besagten ersten Funkabdeckungsbereich (230) bereitstellt, oder nur mindestens einen besagten Niedrigleistungs-Netzwerkzugangsknoten (200), der besagten zweiten Funkabdeckungsbereich (210) bereitstellt, der kleiner ist als besagter erster Funkabdeckungsbereich (230); und wenn dem so ist,
Übertragen einer Angabe an besagtes Benutzerendgerät (260), dass jegliche zum gegebenen Zeitpunkt implementierte Anpassung seiner Übertragungsleistung in Aufwärtsrichtung zur Erhöhung der Übertragungsleistung von mindestens einem Kommunikationskanal in Aufwärtsrichtung zu entfernen ist;

12. Netzwerkkontrollknoten (40), betreibbar zur Anpassung der Übertragungsleistung von Benutzerendgeräten (260) in Aufwärtsrichtung für Benutzerendgeräte (260), die einen sanften Verbindungsübergang (Handover) in einem heterogenen drahtlosen Telekommunikationsnetzwerk (10) ausführen, in welchem mindestens ein Netzwerkzugangsknoten (220) einen ersten Funkabdeckungsbereich bereitstellt (230) und mindestens ein Niedrigleistungs-Netzwerkzugangsknoten (200) einen zweiten Funkabdeckungsbereich (210) bereitstellt, der kleiner ist als der besagte erste Funkabdeckungsbereich (230), wobei besagter Netzwerkkontrollknoten (240) umfasst:
eine Empfangslogik, die konfiguriert ist, um eine Anfrage von besagtem Benutzerendgerät (260) bezüglich des Hinzufügens eines neuen Netzwerkzugangsknotens (220) oder Niedrigleistungs-Netzwerkzugangsknotens (200) zu seinem aktiven Set zu empfangen;
Ermittlungslogik, die konfiguriert ist, um zu ermitteln, ob das Hinzufügen besagten neuen Netzwerkzugangsknotens (220) oder Niedrigleistungs-Netzwerkzugangsknotens (200) besagtes aktives Set in ein aktives Set umwandeln wird, das sowohl den mindestens einen besagten Netzwerkzugangsknoten (220), der besagten ersten Funkabdeckungsbereich (230) bereitstellt als auch den mindestens einen besagten Niedrigleistungs-Netzwerkzugangsknoten (200) umfasst, der besagten zweiten Funkabdeckungsbereich (210) bereitstellt, der kleiner ist als besagter erster Funkabdeckungsbereich (230); und
Übertragungslogik, die konfiguriert ist, um, wenn das Hinzufügen des besagten Netzwerkzugangsknotens oder Niedrigleistungs-Netzwerkzugangsknotens besagtes aktives Set in ein gemischtes aktives Set umwandelt, eine Angabe an besagtes Benutzerendgerät (260) zu übermitteln, um seine Übertragungsleistung in Aufwärtsrichtung durch die Erhöhung der Übertagungsleistung von mindestens einem Kommunikationskanal in Aufwärtsrichtung anzupassen, wenn besagter Anfrage zum Hinzufügen besagten Netzwerkzugangsknotens (220) oder Niedrigleistungs-Netzwerkzugangsknotens (200) zu seinem aktiven Set stattgegeben wird.

13. Computersoftware-Produkt, betreibbar, wenn es auf einem Computer ausgeführt wird, zum Umsetzen des Verfahrens nach einem beliebigen der Ansprüche 1 bis 11.

## Revendications

1. Procédé de noeud de contrôle du réseau (40) pour adapter une puissance de transmission de liaison montante d'équipement utilisateur (260) d'un équipement utilisateur (260) effectuant un transfert intercellulaire sans coupure dans un réseau de télécommunication sans fil hétérogène (10) dans lequel au moins un noeud d'accès au réseau (220) fournit une première région de couverture radio (230), et au moins un noeud d'accès au réseau de faible puissance (200) fournit une deuxième région de couverture radio (210) qui est plus petite que ladite première région de couverture radio (230), ledit procédé comprenant les étapes suivantes :
recevoir une demande provenant dudit équipement utilisateur (260) pour ajouter un nouveau noeud d'accès au réseau (220) ou un noeud d'accès au réseau de faible puissance (200) à son ensemble actif ;
déterminer si l'ajout dudit nouveau noeud d'accès au réseau (220) ou dudit noeud d'accès au réseau de faible puissance (200) changera ou non ledit ensemble actif en un ensemble actif mixte comprenant à la fois au moins un dit noeud d'accès au réseau (220) qui fournit ladite première région de couverture radio (230) et au moins un dit noeud d'accès au réseau de faible puissance (200) qui fournit ladite deuxième région de couverture radio (210) plus petite que ladite première région de couverture radio (230) ; et, si l'ajout dudit noeud d'accès au réseau ou dudit noeud d'accès au réseau de faible puissance change ledit ensemble actif en un ensemble actif mixte,
transmettre audit équipement utilisateur (260) une indication pour adapter sa puissance de transmission de liaison montante en augmentant la puissance de transmission d'au moins un canal de communication de liaison montante, si ladite demande d'ajout dudit nouveau noeud d'accès au réseau (220) ou dudit noeud d'accès au réseau de faible puissance (200) à son ensemble actif est approuvée.

2. Procédé selon la revendication 1, dans lequel ledit au moins un canal de communication de liaison montante est configuré pour une mise en oeuvre d'une messagerie de commande de cellule de desserte.

3. Procédé selon la revendication 1 ou la revendication 2, dans lequel ledit au moins un canal de communication de liaison montante comprend un canal de rétroaction de liaison montante.

4. Procédé selon la revendication 1 ou la revendication 2, dans lequel ledit au moins un canal de communication de liaison montante comprend un canal configuré pour une mise en oeuvre d'une messagerie de commande d'informations de planification.

5. Procédé selon l'une quelconque des revendications précédentes, dans lequel ladite indication pour adapter la puissance de transmission de liaison montante d'équipement utilisateur comprend en outre une indication de ladite augmentation de la puissance de transmission de liaison montante.

6. Procédé selon l'une quelconque des revendications précédentes, dans lequel ladite indication pour adapter la puissance de transmission de liaison montante d'équipement utilisateur comprend une indication de ladite augmentation de la puissance de transmission de liaison montante par rapport à chaque canal parmi ledit au moins un canal de communication de liaison montante.

7. Procédé selon l'une quelconque des revendications précédentes, dans lequel ladite augmentation de la puissance de transmission d'au moins un canal de communication de liaison montante comprend un décalage de puissance configurable par rapport audit au moins un canal de communication de liaison montante.

8. Procédé selon l'une quelconque des revendications précédentes, dans lequel ladite augmentation de la puissance de transmission d'au moins un canal de communication de liaison montante comprend une indication d'une puissance de transmission minimum par rapport audit au moins un canal de communication de liaison montante.

9. Procédé selon l'une quelconque des revendications précédentes, dans lequel ladite indication pour adapter la puissance de transmission de liaison montante d'équipement utilisateur comprend en outre une indication de critères opérationnels devant être satisfaits par des noeuds d'accès dans ledit ensemble actif d'équipement utilisateur avant la mise en oeuvre de ladite augmentation de la puissance de transmission de liaison montante.

10. Procédé selon la revendication 9, dans lequel ladite indication de critères opérationnels comprend une indication d'une différence de seuil entre une intensité de signal pilote reçu provenant d'une cellule de desserte et une intensité de signal pilote reçu provenant dudit nouveau noeud d'accès au réseau (220) ou dudit noeud d'accès au réseau de faible puissance (200).

11. Procédé selon l'une quelconque des revendications précédentes, dans lequel ledit procédé comprend en outre la réception d'une notification provenant dudit équipement utilisateur (260) selon laquelle le noeud d'accès au réseau (220) ou le noeud d'accès au réseau de faible puissance (200) doit être retiré de son ensemble actif ;
la détermination selon laquelle le retrait dudit nouveau noeud d'accès au réseau (220) ou dudit noeud d'accès au réseau de faible puissance (200) changera ou non ledit ensemble actif en un ensemble actif contenant seulement au moins un dit noeud d'accès au réseau (220) fournissant ladite première région de couverture radio (230) ou seulement au moins un dit noeud d'accès au réseau de faible puissance (200) fournissant ladite deuxième région de couverture radio (210) plus petite que ladite première région de couverture radio (230) ; et, si tel est le cas
la transmission d'une indication audit équipement utilisateur (260) pour retirer toute adaptation actuellement mise en oeuvre de sa puissance de transmission de liaison montante pour augmenter la puissance de transmission d'au moins un canal de communication de liaison montante.

12. Noeud de contrôle du réseau (40) permettant d'adapter une puissance de transmission de liaison montante d'équipement utilisateur (260) pour un équipement utilisateur (260) effectuant un transfert intercellulaire sans coupure dans un réseau de télécommunication sans fil hétérogène (10) dans lequel au moins un noeud d'accès au réseau (220) fournit une première région de couverture radio (230), et au moins un noeud d'accès au réseau de faible puissance (200) fournit une deuxième région de couverture radio (210) qui est plus petite que ladite première région de couverture radio (230), ledit noeud de contrôle du réseau (240) comprenant :
une logique de réception configurée pour recevoir une demande dudit équipement utilisateur (260) pour ajouter un nouveau noeud d'accès au réseau (220) ou un noeud d'accès au réseau de faible puissance (200) à son ensemble actif ;
une logique de détermination configurée pour déterminer si l'ajout dudit nouveau noeud d'accès au réseau (220) ou dudit noeud d'accès au réseau de faible puissance (200) changera ou non ledit ensemble actif en un ensemble actif mixte contenant à la fois au moins un dit noeud d'accès au réseau (220) fournissant ladite première région de couverture radio (230) et au moins un dit noeud d'accès au réseau de faible puissance (200) fournissant ladite deuxième région de couverture radio (210) plus petite que ladite première région de couverture radio (230) ; et
une logique de transmission configurée pour transmettre, si l'ajout dudit noeud d'accès au réseau ou dudit noeud d'accès au réseau de faible puissance change ledit ensemble actif en un ensemble actif mixte, une indication audit équipement utilisateur (260) pour adapter sa puissance de transmission de liaison montante en augmentant la puissance de transmission d'au moins un canal de communication de liaison montante si ladite demande d'ajout dudit nouveau noeud d'accès au réseau (220) ou dudit noeud d'accès au réseau de faible puissance (200) à son ensemble actif est approuvée.

13. Produit de programme informatique permettant, lorsqu'il est exécuté sur un ordinateur, d'exécuter le procédé selon l'une quelconque des revendications 1 à 11.
